(19) Europäisches Patentamt
European Patent Office
Office européen des brevets

(11) **EP 3 876 546 A1**

(12) **EUROPEAN PATENT APPLICATION**
published in accordance with Art. 153(4) EPC

(43) Date of publication:
**08.09.2021 Bulletin 2021/36**

(21) Application number: **19888542.8**

(22) Date of filing: **03.09.2019**

(51) Int Cl.:
**H04N 21/431** (2011.01)     **H04N 21/4402** (2011.01)
**H04N 21/443** (2011.01)     **H04N 21/45** (2011.01)

(86) International application number:
**PCT/CN2019/104132**

(87) International publication number:
**WO 2020/107988 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2018 CN 201811429222**

(71) Applicant: **GUANGDONG OPPO MOBILE
TELECOMMUNICATIONS
CORP., LTD.
Dongguan, Guangdong 523860 (CN)**

(72) Inventor: **YANG, Hai
Dongguan, Guangdong 523860 (CN)**

(74) Representative: **Ipside
7-9 Allées Haussmann
33300 Bordeaux Cedex (FR)**

(54) **VIDEO PROCESSING METHOD AND APPARATUS, AND ELECTRONIC DEVICE AND STORAGE MEDIUM**

(57)     Disclosed are a video processing method and apparatus, and an electronic device and a storage medium, relating to the technical field of electronic devices. The method is applied to an electronic device, and the method comprises: acquiring a video file type of a video resource to be played; determining a target display enhancement mode corresponding to the video file type from among multiple display enhancement modes, wherein video image qualities acquired by processing the video resource to be played by means of all the display enhancement modes of the multiple display enhancement modes are different; and based on the target display enhancement mode, carrying out display enhancement processing on the video resource to be played, wherein in the display enhancement processing, images in a video file are processed by means of the target display enhancement mode, such that the video image quality of the video file is improved. In the embodiments of the present application, different display enhancement modes are determined according to different video file types, so that display enhancement processing is carried out on a video resource to be played by means of a corresponding display enhancement mode, thereby improving the display effect of the video resource to be played.

FIG. 2

**Description**

**CROSS-REFERENCE TO RELATED APPLICATIONS**

The present application claims the Chinese priority of Chinese Patent Application No. 201811429222.X, filed on November 27, 2018, the entire contents of which are hereby incorporated by reference in its entirety.

**TECHNICAL FIELD**

The present application relates to the field of electronic devices, and particularly to a video processing method, an apparatus, an electronic device and a storage medium.

**BACKGROUND**

With the development of electronic technology and information technology, an increasing number of devices may play videos. While playing the videos, the device needs to perform operations such as decoding, rendering, and synthesis, on the videos, and then display the videos on a display screen.

**SUMMARY OF THE DISCLOSURE**

The present disclosure provides a video-processing method, an apparatus, an electronic device, and a computer-readable medium to solve the above technical problem.

According to a first aspect, a video processing method, applied on an electronic device, is provided and includes: acquiring a video file type of a video resource to be played; determining a target display enhancement mode corresponding to the video file type from a plurality of display enhancement modes, wherein processing the video resource to be played by the plurality of display enhancement modes obtains different image qualities; performing display enhancement on the video resource to be played based on the target display enhancement mode, wherein an image in a video file is enhanced by performing the target display enhancement mode, and an image quality of the video file is improved.

According to a second aspect, a video processing apparatus, applied on an electronic device, is provided and includes: an acquisition module, configured to acquire a video file type of a video resource to be played; a determination module, configured to determine the target display enhancement mode corresponding to the video file type from a plurality of display enhancement modes, wherein processing the video resource to be played by the plurality of display enhancement modes obtains different image qualities; and a processing module, configured to perform display enhancement on the video resource to be played based on the target display enhancement mode, wherein an image in a video file is enhanced by performing the target display enhancement mode, and an image quality of the video file is improved.

According to a third aspect, an electronic device is provided and includes a memory and a processor. The memory is coupled to the processor, the memory is configured to store instructions, and the processor is configured to execute the above-mentioned method when the instructions are executed by the processor.

According to a fourth aspect, a computer-readable storage medium is provided and stores program codes. The program codes are capable of being invoked and executed by a processor to execute the above-mentioned method.

**BRIEF DESCRIPTION OF THE DRAWINGS**

In order to illustrate technical solutions of embodiments of the present disclosure clearly, accompanying drawings for describing the embodiments will be introduced in brief. Obviously, the drawings in the following description are only some embodiments of the present application. For those skilled in the art, other drawings may be obtained based on the provided drawings without any creative work.

FIG. 1 is a flow chart of video playing according to an embodiment of the present disclosure.
FIG. 2 is flow chart of a video-processing method according to an embodiment of the present disclosure.
FIG. 3 is a flow chart of a video-processing method according to another embodiment of the present disclosure.
FIG. 4 is a flow chart of the operation S206 of the video-processing method shown in FIG. 3.
FIG. 5 is flow chart of a video-processing method according to still another embodiment of the present disclosure.
FIG. 6 is a flow chart of the operation S303 of the video-processing method shown in FIG. 5.
FIG. 7 is a flow chart of a video-processing method according to still another embodiment of the present disclosure.
FIG. 8 is a flow chart of the operation S303 of the video-processing method shown in FIG. 7.
FIG. 9 is a block diagram of a video-processing apparatus according to an embodiment of the present disclosure.
FIG. 10 is a block diagram of an electronic device executing a video-processing method according to an embodiment of the present disclosure.

FIG. 11 is a storage unit, which stores or carries a program code for performing the video-processing method according to an embodiment of the present disclosure.

## DETAILED DESCRIPTION

In order to allow any ordinary skilled person in the art to understand the technical solution of the present disclosure, technical solutions of the present disclosure may be clearly and comprehensively described by referring to the accompanying drawings.

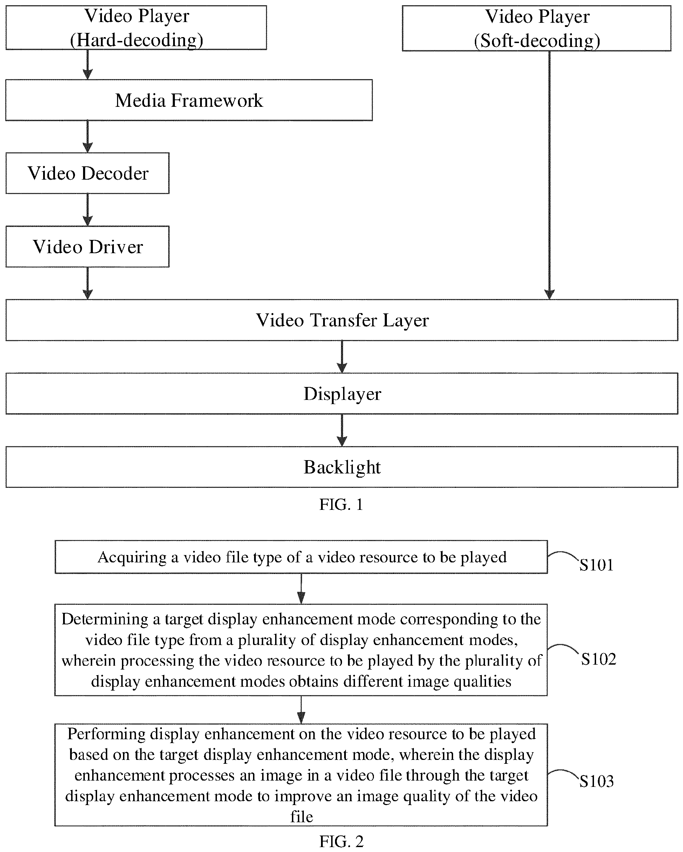

As shown in FIG. 1, FIG. 1 is a diagram of a framework of playing a video according to an embodiment of the present disclosure. In detail, in response to an operating system acquiring data to be displayed, the operating system may decode audio and video data. Typically, a video file includes a video stream and an audio stream. Packaging formats of the audio and video data in various video formats are various. A process of synthesizing the audio stream and the video stream may be referred as muxer, whereas a process of separating the audio stream and the video stream out of the video file may be referred as demuxer. Playing the video file may require the audio stream and the video stream to be separated from the video file and decoded. A decoded video frame may be rendered directly. An audio frame may be sent to a buffer of an audio output device to be played. Timestamp of video rendering the video frame and timestamp of playing the audio frame must be controlled to be synchronous.

In detail, video decoding may include hard decoding and soft decoding. The hard decoding refers to enabling a graphics processing unit (GPU) to process a part of the video data which is supposed to be processed by a central processing unit (CPU). As a computing capacity of the GPU may be significantly greater than that of the CPU, a computing load of the CPU may be significantly reduced. As an occupancy rate of the CPU is reduced, the CPU may run some other applications at the same time. As a relatively better CPU, such as i5 2320, AMD, or any four-core processor, a difference between the hard decoding and the soft decoding is just a matter of personal preference.

In detail, as shown in FIG. 1, a media framework may acquire a video file to be played on the client from an API of the client, and may send the video file to a video decoder (Video Decode). The media framework may be installed in an Android operating system, and a basic framework of the media framework of the Android operating system may be composed of a MediaPlayer, a MediaPlayerService, and a Stagefrightplayer. The media player has a client/server (C/S) structure. The MediPlayer serves as the client of the C/S structure. The MediaPlayerService and the Stagefrightplayer serve as the server side of the C/S structure and play a role in playing a multimedia file. The server side may achieve and respond to a request of the client through the Stagefrightplayer. The Video Decode is an ultra-video decoder integrating functions of audio decoding, video decoding, and playing the multimedia file, and configured to decode the video data.

The soft decoding refers to the CPU performing video decoding through software. The hard decoding refers to performing the video decoding by a certain daughter card only, without the CPU.

Regardless of hard decoding or soft decoding, after the video data is decoded, the decoded video data may be sent to SurfaceFlinger. The decoded video data may be rendered and synthesized by SurfaceFlinger, and displayed on the display screen. The SurfaceFlinger is an independent service, and receives a surface of all Windows as an input. The SurfaceFlinger may calculate a position of each surface in a final synthesized image based on parameters, such as ZOrder, transparency, a size, and a position. The SurfaceFlinger may send the position of each surface to HWComposer or OpenGL to generate a final display Buffer, and the final display Buffer may be displayed on a certain display device.

As shown in Figure 1, in soft decoding, the CPU may decode the video data and send the decoded video data to SurfaceFlinger to be rendered and synthesized. In hard decoding, the GPU may decode the video data and send the decoded video data to SurfaceFlinger to be rendered and synthesized. The SurfaceFlinger may invoke the GPU to achieve image rendering and synthesis, and display the rendered and synthesized image on the display screen.

In the art, a way that the electronic device processes the video data may be fixed. For example, display enhancement may be performed on all or none of the video resources played by electronic devices. When the electronic device performs the display enhancement on the video resources played, the display enhancement may be carried out in a same way, an appropriate display enhancement manner may not be selected for different video sources. Therefore, the video quality obtained after the display enhancement process may not be good and the display effect may not be good. The applicant has discovered after long-term research and proposed a video processing method, an apparatus, an electronic device and a storage medium, which may determine different display enhancement manners for different video file types, so as to enhance the display effect of the video resources to be played by performing corresponding display enhancement manners for the video resources to be played. Specific video processing processes will be described in detail in the following embodiments.

Embodiments

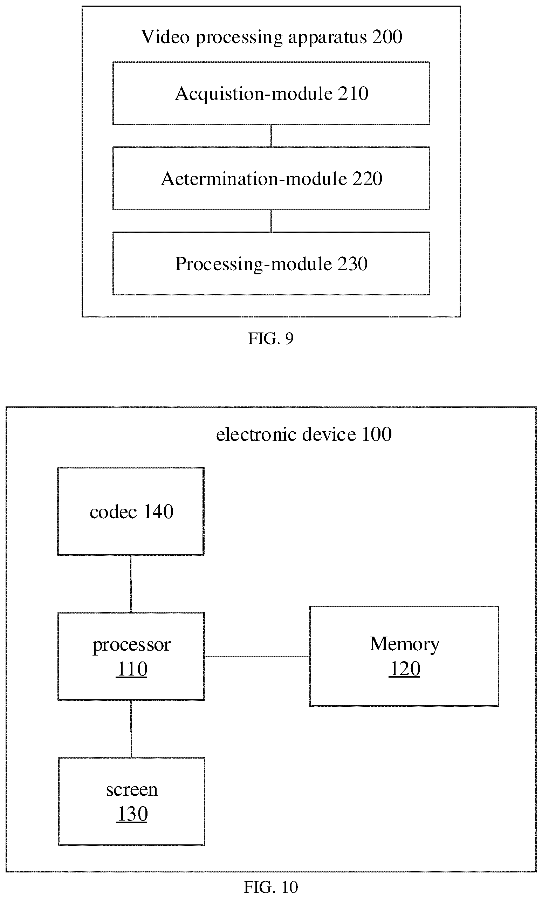

Please refer to FIG. 2, FIG. 2 is a flow chart of a video-processing method according to an embodiment of the present disclosure. The video-processing method may be performed to determine different display enhancement modes for different video file types, display enhancement may be performed on the video resource to be played through a corresponding display enhancement mode, such that the display effect of the video resource to be played may be improved. In an embodiment of the present disclosure, the video-processing method may be applied in a video processing apparatus 200 as shown in FIG. 9 and an electronic device 100 equipped with the video-processing device 200 (FIG. 10). An electronic device will be taken as an example in the following to describe detailed processes of the embodiment of the present disclosure. It should be understood that, the electronic device of the present embodiment may be a smart phone, a tablet computer, a wearable electronic device, a vehicle-mounted device, gateways, and so on, which will not be limited by the present disclosure. In the following, the embodiment of the present application in FIG. 2 will be described in detail, the video-processing method may include following operations.

In an operation S101, a video file type of a video resource to be played may be acquired.

In the embodiment of the present disclosure, the video resource to be played by the electronic device may include a video resource to be played at a foreground of the electronic device, a video resource to be played at a background of the electronic device, and a video resource to be switched between the foreground and background of the electronic device, which will not be limited by the present disclosure. Specifically, the foreground video resource may interact with a user, may be displayed at the foreground, and may be hung up while not being watched. The background video resource may refer to a video resource that has limited interaction with the user. The background video resource may be hidden during a survival period other than a configuration period. The video resource to be switched between the background and the foreground of the electronic device may refer to a video resource that may be arbitrarily switched between the background and the foreground of the electronic device. In the embodiment of the present disclosure, the video resource to be played may be the video resource to be played in the foreground of the electronic device. In an embodiment the video resource to be played may be stored in a memory of the electronic device, waiting to be read and played by the electronic device.

Further, after determining the video resource to be played, the electronic device may acquire the video file type corresponding to the video to be played. In the present embodiment, the video file type may include a variety show, a movie, a TV series, sports, a show for children, animation, news, etc., which will not be limited by the present disclosure. In an implementation, the video file type of the video resource to be played may be acquired directly. Alternatively, a name of the video resource to be played may be acquired first, and the video file type of the video resource to be played may be acquired through the name, which will not be repeatedly described here.

In an operation S102, a target display enhancement mode corresponding to the video file type may be determined from a plurality of display enhancement modes, processing the video resource to be played by the plurality of display enhancement modes obtains different image qualities.

In the present embodiment, the electronic device may store a plurality of display enhancement modes and a plurality of video file types, and store corresponding relationships between the plurality of display enhancement modes and the plurality of video file types. A corresponding relationship may include one display enhancement mode corresponding to one or more video file types, and one video file type corresponding to one or more display enhancement modes, which will not be limited by the present disclosure. The corresponding relationships between the display enhancement modes and the video file types may be preset by the user and stored in the electronic device, may be preset automatically by the electronic device and stored therein, or may be preset by the server and sent to the electronic device, which will not be limited by the present disclosure.

In the present embodiment, processing the video resource to be played by the plurality of display enhancement modes may obtain different image qualities. That is to say, a same video resource file may be processed by the plurality of display enhancement modes, and various display enhancement effects may be obtained, for example, the plurality of display enhancement modes may be performed by taking different optimization parameters, different numbers of optimization parameters, different optimization methods of optimization parameters, such that different optimization effects of the same video resource may be achieved.

In an implementation, the electronic device may create a mapping table, which may include the corresponding relationships between the plurality of display enhancement modes and the plurality of video file types. For example, the mapping table may be as shown in Table 1. The display enhancement mode may be represented as A and the video file type may be represented as B. Through the mapping table, the electronic device may set the corresponding relationships between the display enhancement modes and the video file types and store the corresponding relationships in a local memory.

Table 1

| Display enhancement method | Video file type |
| --- | --- |
| A1 | B1 |
| A2 | B2 |
| A3 | B3 |
| A4 | B4 |

Further, in this embodiment of the present disclosure, after the video file type of the video resource to be played is determined, a video file type, i.e., a predetermined video file type, that is the same as the video file type of the video resource to be played may be searched from the mapping table. The display enhancement mode corresponding to the video file type of video resource to be played may be searched based on the corresponding relationships between the display enhancement modes and the video file types in the mapping table. The display enhancement mode may be taken as the target display enhancement mode. For example, when the video type of the video resource to be played is the variety show, the electronic device may search the video type being the same as the variety show. In response to B1 being found to be the variety show, the display enhancement mode corresponding to the video file type B1 may be determined as A1, based on the mapping table. In this way, the display enhancement mode corresponding to the variety show may be determined to be A1.

In an operation S103, the video resource to be played may be enhanced based on the target display enhancement mode, and image quality of an image in the video file may be enhanced by performing the target display enhancement mode.

Further, after the target display enhancement mode corresponding to the video file type is determined, the video resource to be played may be enhanced through the target display enhancement mode. The image in the video resource may be processed by the determined target display enhancement mode, and the image quality of the video resource may be improved. The display effect of the video resource may be improved by performing the display enhancement mode adapted to the video file type of the video resource on the video resource. For example, for a video resource in a detective type, the display effect of the video resource may be shifted to colder by performing the display enhancement on the video resource. The image quality may include definition, sharpness, lens distortion, color, resolution, gamut range, purity and so on, and different combinations of such qualities may have different display enhancement effects. It should be noted that display enhancement of video resource may also be interpreted as a series of processes before formally processing the video resource, the display enhancement may include image enhancement and image restoration. Image enhancement may refer to adding some information or transforming data into the original image by certain means, and selectively highlighting features of interest in the image or suppressing some features in the image that are unnecessary, such that the image may match the target optimization parameters, the image quality may be improved, and the visual effect may be enhanced. It should be understood that, display enhancement may be performed on the video resource to be played by taking the optimization parameter and the optimization mode corresponding to the target display enhancement mode. Taking the optimization parameters as an example, performing display enhancement on the video resource to be played may include performing at least one of exposure enhancement, denoising, edge sharpening, contrast increase and saturation increase.

In detail, video content displayed by the electronic device may be content of a decoded image. As the decoded image content may be data in an RGBA format, and therefore, in order to optimize the image content, the data in the RGBA format may be required to be converted into data in a HSV format. In detail, a histogram of the image content may be acquired, and statistics may be performed on the histogram to obtain a parameter for converting the data in the RGBA format into the data in the HSV format. The data in the RGBA format may be converted into the data in the HSV format based on the parameter.

The exposure enhancement may be performed to increase brightness of the image. Brightness of areas having low brightness values may be increased through a histogram of the image. Alternatively, brightness of the image may be increased by non-linear superposition. In detail, I represents a dark image to be processed, and T represents a brighter image after being processed. The exposure enhancement may be achieved by means of $T(x)=I(x)+(1-I(x))*I(x)$. Each of the T and the I may be an image having a value in a range of [0, 1]. In response to brightness increasing being not achieved effectively by performing the exposure enhancement only once, the exposure enhancement may be performed iteratively.

Denoising the image data may be performed to remove noise of the image. In detail, the image may be affected and interfered by various noise while being generated and sent, causing quality of the image to be reduced, and therefore, image processing and a visual effect of the image may be negatively affected. There are many types of noise, such as electrical noise, mechanical noise, channel noise and other types of noise. Therefore, in order to suppress the noise, improve the quality of the image, and facilitate higher-level processing, a denoising pre-process may be performed on the image. Based on probability distribution of the noise, the noise may be classified as Gaussian noise, Rayleigh noise, gamma noise, exponential noise and uniform noise.

In detail, the image may be denoised by a Gaussian filter. The Gaussian filter may be a linear filter able to effectively suppress the noise and smooth the image. A working principle of the Gaussian filter may be similar to that of an average filter. An average value of pixels in a filter window may be taken as an output. A coefficient of a template of the window in the Gaussian filter may be different from that in the average filter. The coefficient of the template of the average filter may always be 1. However, the coefficient of the window template of the Gaussian filter may decrease as a distance between a pixel in the window and a center of the window increases. Therefore, a degree of blurring of the image caused by the Gaussian filter may be smaller than that caused by the average filter.

For example, a 5×5 Gaussian filter window may be generated. The center of the window template may be taken as an origin of coordinates for sampling. Coordinates of each position of the template may be brought into the Gaussian function, and a value obtained may be the coefficient of the window template. Convolution may be performed on the Gaussian filter window and the image to denoise the image.

Edge sharpening may be performed to enable a blurred image to become clear. Generally, the edge sharpening may be achieved by two means, i.e., by differentiation and by high-pass filtering.

The contrast increasing may be performed to enhance the quality of the image, enabling colors in the image to be vivid. In detail, the image enhancement may be achieved by performing contrast stretching, and the contrast stretching may be a gray-scale transformation operation. Gray-scale values may be stretched to cover an entire interval of 0-255 through the gray scale transformation. In this way, the contrast may be significantly enhanced. A following formula may be taken to map a gray value of a certain pixel to a larger gray-scale space.

$$I(x,y)=[(I(x,y)-Imin)/(Imax-Imin)](MAX-MIN)+MIN$$

The Imin represents a minimal gray scale value of an original image, and the Imax represents a maximal gray scale value of the original image. The MIN represents a minimal gray scale value of the gray scale space that a pixel is stretched to reach, and the MAX represents a maximal gray scale value of the gray scale space that a pixel is stretched to reach.

Therefore, the optimization parameters of the target display enhancement mode may include one or more of the above optimization parameters, and the video resource to be played may be processed based on the optimization parameters of the target display enhancement mode, so as to acquire the display enhancement effect matching the video file type.

According to the video processing method provided by the present disclosure, the video file type of the video resource to be played may be acquired, and the target display enhancement mode corresponding to the video file type may be determined from a plurality of display enhancement modes. Processing the video resource to be played by the plurality of display enhancement modes may obtain different image qualities. The video resource to be played may be enhanced based on the target display enhancement mode, and image quality of an image in the video file may be enhanced by performing the target display enhancement mode. In this way, different display enhancement modes may be determined based on different video file types. The video resource to be played may be enhanced by performing the corresponding display enhancement mode to improve the display effect of the video resource to be played.

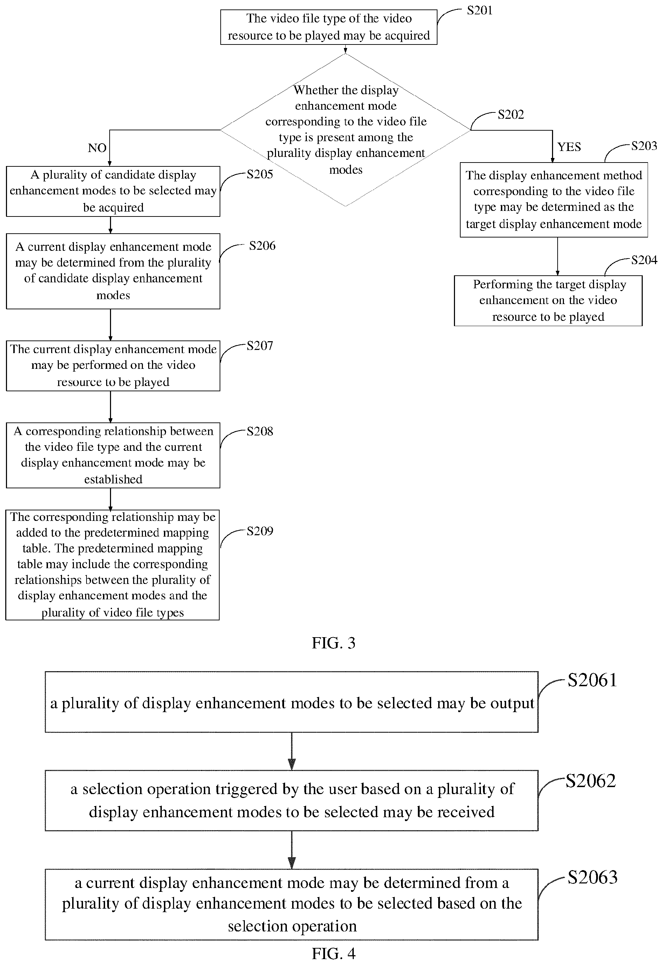

Referring to FIG. 3, FIG. 3 is a flow chart of a video-processing method according to another embodiment of the present disclosure. The process shown in FIG. 3 will be described in detail below. The method may specifically include the following operations.

In an operation S201, the video file type of the video resource to be played may be acquired.

Detailed description of the operations S201 may refer to the operation S101, which will not be repeatedly described hereinafter.

In an operation S202, it may be determined whether the display enhancement mode corresponding to the video file type is present among the plurality display enhancement modes.

In an implementation, the corresponding relationships between the plurality of display enhancement modes and the plurality of video file types may be stored in the mapping table of the electronic device. It should be understood that in response to the video file type of the video resource to be played being the same as any one of the video file types in the mapping table, it may be determined that the display enhancement mode corresponding to the video file type of the video resource to be played is predefined in the mapping table, indicating that the display enhancement mode corresponding to the video file type is included in the plurality of display enhancement modes. In response to the video file type of the video resource to be played not matching any one of the video file types in the mapping table, it may be determined that the mapping table does not include the display enhancement mode corresponding to the video file type of the video resource to be played, indicating that the plurality of display enhancement modes does not include the display enhancement mode corresponding to the video file type.

In the present embodiment, when determining the video file type of the video resource to be played, the video resource to be played may be compared with the plurality of video file types in the mapping table to determine whether the plurality of video file types in the mapping table include the video file type of the video resource to be played. In this way, it may further be determined that whether the plurality of display enhancement modes include the display enhancement mode corresponding to the video file type of the video resource to be played.

In an operation S203, in response to the display enhancement mode corresponding to the video file type being present in the plurality of display enhancement modes, the display enhancement method corresponding to the video file type may be determined as the target display enhancement mode.

In response to the display enhancement mode corresponding to the video file type being present, indicating that the display enhancement mode corresponding to the video file type is present in the plurality of display enhancement modes, the display enhancement method corresponding to the video file type may be determined as the target display enhancement mode.

In an operation S204, performing display enhancement on the video resource to be played based on the target display enhancement mode, and image quality of the image in the video file may be enhanced by performing the target display enhancement mode.

Detailed description of the operations S203 - S204 may refer to the operations S102 - S103, which will not be repeatedly described hereinafter.

In an operation S205, in response to the display enhancement mode corresponding to the video file type being not present in the plurality of display enhancement modes, a plurality of display enhancement modes to be selected may be acquired.

On the contrary, in response to the display enhancement mode corresponding to the video file type being not present, indicating that the display enhancement mode corresponding to the video file type of the video resource to be played is not present in a plurality of display enhancement modes, that is, the electronic device may not acquire the display enhancement mode corresponding to the video file type of the video resource to be played based on the predefined corresponding relationships between the display enhancement modes and the video file types. In this case, in an implementation, the electronic device may acquire the plurality of display enhancement modes to be selected.

The electronic device may randomly generate a plurality of display enhancement modes. Display enhancement modes that are performed highly frequently may be taken as the plurality of display enhancement modes to be selected. Alternatively, a reference video file type similar to the video file type may be obtained, and a display enhancement mode corresponding to the reference video file type may be obtained and taken as a display enhancement mode to be selected. The present disclosure does not limit a way to determine the plurality of display enhancement modes to be selected. For example, the acquired display enhancement mode to be selected may be the display enhancement mode corresponding to the reference video file type. The TV series type may be similar to the movie type. The display enhancement mode for the TV series type may be included in the plurality of display enhancement modes. For example, the display enhancement mode may be A2, but the display enhancement mode corresponding to the movie type may not be present. In response to the video file type of the video resource to be played being the movie type, the TV series type, which is similar to the movie type, may be acquired, and the display enhancement mode corresponding to the TV series type may be the display enhancement mode A2, and the electronic device may acquire the display enhancement mode A2 as the display enhancement mode to be selected.

In an operation S206, a current display enhancement mode may be determined from the plurality of display enhancement modes to be selected.

It should be understood that in the present embodiment, at least one display enhancement mode may be determined as the current display enhancement mode from the plurality of display enhancement modes to be selected.

As shown in FIG. 4, FIG. 4 is a flow chart of the operation S206 of the video-processing method shown in FIG. 3. The process shown in FIG. 4 will be described in detail below. The method may include the following operations.

In an operation S2061, the plurality of display enhancement modes to be selected may be output.

In an implementation, the electronic device may output the plurality of display enhancement modes to be selected. The electronic device may output the plurality of display enhancement modes to be selected by audio, by displaying, or by sending the plurality of display enhancement modes to be selected to other electronic devices, which will not be limited by the present disclosure.

In an operation 2062, a selection operation triggered by the user based on the plurality of display enhancement modes to be selected may be received.

In the present embodiment, the electronic device may detect the selection operation performed on the plurality of display enhancement modes to be selected. In response to detecting the selection operation triggered by the user, the electronic device may receive the selection operation. The selection operation may include a touch operation performed on the electronic device and/or voice information input into the electronic device, which will not be limited by the present disclosure. In an implementation, when the selection operation is the touch operation performed on the electronic device, the touch operation may at least include a single-finger click, a multi-finger click, a single-finger long press, a multi-finger long press, a heavy press, multiple clicks, a sliding operation and so on.

In an operation 2063, the current display enhancement mode may be determined from the plurality of display enhancement modes to be selected based on the selection operation.

Furthermore, based on the selection operation triggered by the user, one or more display enhancement modes may be determined from the plurality of display enhancement modes to be selected as the current display enhancement mode. For example, the plurality of display enhancement modes to be selected may include a display enhancement mode A1, a display enhancement mode A2 and a display enhancement mode A3. The user may determine at least one display enhancement mode from the display enhancement mode A1, the display enhancement mode A2 and the display enhancement mode A3 as the current display enhancement mode. For example, display enhancement mode A1 may be selected as the current display enhancement mode; alternatively, the display enhancement modes A1 and A2 may be selected as the current display enhancement modes.

In an operation S207, the video resource to be played may be enhanced based on the current display enhancement mode.

In the present embodiment, the video resource to be played may be enhanced based on the current display enhancement mode determined by the user. In response to the number of current display enhancement modes determined by the user being one, the video resource to be played may be enhanced by the one display enhancement mode. In response to the number of current display enhancement modes determined by the user being more than one, one display enhancement mode may be determined randomly from the more than one display enhancement modes, and then the video resource may be enhanced by the one display enhancement mode.

In an operation S208, a corresponding relationship between the video file type and the current display enhancement mode may be established.

Furthermore, the corresponding relationship between the video file type and the current display enhancement mode may be established. In response to the number of the current display enhancement modes being one, the corresponding relationship between the video file type and the one display enhancement mode may be established. In response to the number of the current display enhancement modes being more than one, the corresponding relationships between the video file type and the more than one display enhancement modes may be established.

In an operation S209, the corresponding relationship may be added to the predetermined mapping table. The predetermined mapping table may include the corresponding relationships between the plurality of display enhancement modes and the plurality of video file types.

The electronic device may be preset to include the corresponding relationships between the plurality of display enhancement modes and the plurality of video file types. Therefore, after acquiring the corresponding relationship between the video file type and the current display enhancement mode, the corresponding relationship may be added to the predetermined mapping table. In this way, when the video resource file corresponding to the video file type is acquired by the electronic device again, the corresponding display enhancement mode may be found directly from the predetermined mapping table.

According to the video processing method provided by another embodiment of the present application, the video file type of the video resource to be played may be acquired, it may be determined whether the display enhancement mode corresponding to the video file type is present in the plurality of display enhancement modes. In response to the display enhancement mode corresponding to the video file type being present in the plurality of display enhancement modes, the display enhancement mode corresponding video file type may be determined to be the target display enhancement mode. The video resource to be played may be enhanced based on the target display enhancement mode. In response to the display enhancement mode corresponding to the video file type being not present in the plurality of display enhancement modes, a plurality of display enhancement modes to be selected may be acquired, and the current display enhancement mode may be determined from the plurality of display enhancement modes to be selected. The video resource to be played may be enhanced based on the current display enhancement mode. The corresponding relationship between the video file type and the current display enhancement mode may be established, and the corresponding relationship may be added to the predetermined mapping table. Compared with the video processing method shown in FIG. 2, in the present embodiment, in response to the electronic device being not installed with the display enhancement mode corresponding to the video file type, the plurality of display enhancement modes to be selected may be prompted, the current display enhancement mode may be determined from the plurality of display enhancement modes to be selected for display enhancement. The corresponding relationship between the current display enhancement and the video file type may be established and stored in the electronic device so as to improve the adaptation with a variety of different video file types.

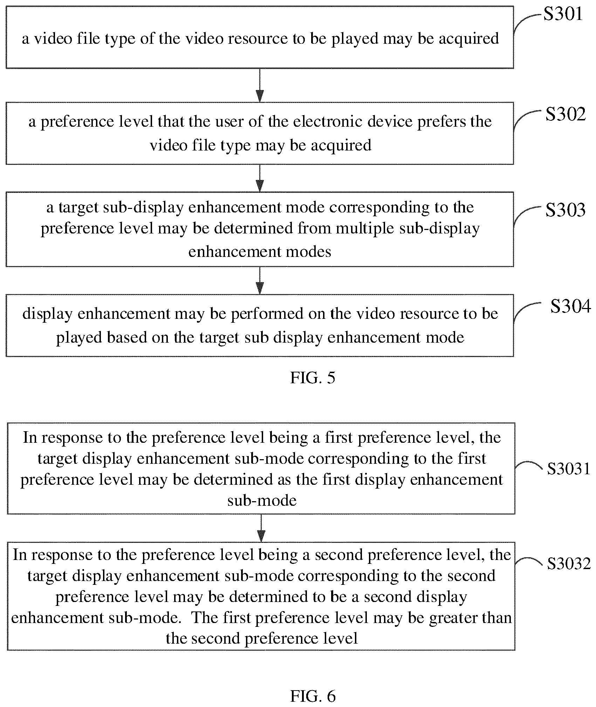

Please refer to FIG. 5, FIG. 5 is flow chart of a video-processing method according to still another embodiment of the present disclosure. The target display enhancement mode may include a plurality of display enhancement sub-modes, and specific operations of the flow chart shown in FIG. 5 may be described in detail. The video processing method may specifically include the following operations.:

In an operation S301, the video file type of the video resource to be played may be acquired.

Detailed description of operation S301 may refer to the operation S101, which will not be repeatedly described hereinafter.

In an operation S302, a preference level that the user of the electronic device prefers the video file type may be acquired.

In an implementation, the user of the electronic device may input the preference level for each video file type. The preference level may be taken as a basis for the electronic device to determine the display enhancement for the video file type of the acquired video resource to be played. The preference level may include "extremely prefer", "very prefer ", "prefer ", "relatively prefer " and "doesn't prefer". When the video file type includes a video file type B1, a video file type B2, a video file type B3, a video file type B4 and a video file type B5, the user of the electronic device may mark the video file Type B1 as "extremely prefer", the video file type B2 as "very prefer", the video file type B3 as "prefer", the video file type B4 as "relatively prefer", and the video file type B5 as "doesn't prefer".

Further, after acquiring the video file type of the video resource to be played, the electronic device may compare the video file type with the predetermined video file type to acquire the video file type being the same as the video file type of the video resource to be played, and acquire the preference level marked for the video file type, and take the acquired preference level as the user's preference for the video resource to be played. For example, the electronic device may compare the video file type of the video resource to be played with the video file type B1, the video file type B2, the video file type B3, the video file type B4 and the video file type B5 respectively to acquire the video file type being the same as the video file type of the video resource to be played. In response to the video file type of the video resource to be played being the same as the video file type B1, the preference level that the user of the electronic device prefers for the video resource to be played may be determined to be "extremely prefer".

In an operation S303, a target display enhancement sub-mode corresponding to the preference level may be determined from a plurality of display enhancement sub-modes.

In the present embodiment, the electronic device may set a specified preference level, serving as a determination basis for the user's preference level. It should be understood that the specified preference level may be stored locally in the electronic device in advance, or may be set while the electronic device is performing the determination. In addition, the specified preference level may be automatically set by the electronic device, manually set by the user, or transmitted to the electronic device after being set by the server, which will not be limited by the present disclosure. For example, the specified preference level may be "prefer". Furthermore, after acquiring the preference level that the user of the electronic device marked for the video resource to be played, the preference level may be compared with the specified preference level to determine whether the preference level meets the specified preference level.

In response to the preference level that the user of the electronic device prefers the video resource to be played being lower than the specified preference level, for example, in response to the preference level being "doesn't prefer", indicating that the user's interest in the video resource to be played is low, the user does not have high requirements for the video image quality when the electronic device plays the video resource to be played. Therefore, the video resource to be played may be played directly without performing the display enhancement on the video resource, so as to reduce power consumption of the electronic device.

On the contrary, in response to the preference level that the user of the electronic device prefers the video resource to be played being not less than the specified preference level, the target display enhancement sub-mode corresponding to the preference level may be determined from the plurality of display enhancement sub-modes. A specific process of determining the target display enhancement sub-mode may be similar to the process of determining the target display enhancement mode corresponding to the video file type, which will not be repeatedly described hereinafter.

Please refer to FIG. 6, FIG. 6 is a flow chart of the operation S303 of the video-processing method shown in FIG. 5. The plurality of display enhancement sub-modes may include a first display enhancement sub-mode and a second display enhancement sub-mode, and the video image quality acquired by performing the first display enhancement sub-mode on the video resource to be played may be greater than that acquired by performing the second display enhancement sub-mode on the video resource to be played. The process shown in FIG. 6 will be described in detail below. The method may specifically include the following operations.

In an operation S3031, in response to the preference level being a first preference level, a target display enhancement sub-mode corresponding to the first preference level may be determined as the first display enhancement sub-mode.

In an operation S3032, in response to the preference level being a second preference level, a target display enhancement sub-mode corresponding to the second preference level may be determined to be the second display enhancement sub-mode. The first preference level may be higher than the second preference level.

The display enhancement sub-modes may include the first display enhancement sub-mode and the second display enhancement sub-mode, the video image quality acquired by performing the first display enhancement sub-mode on the video resource to be played may be greater than that acquired by performing the second display enhancement sub-mode on the video resource to be played. That is, the number of the optimization parameters corresponding to the first display enhancement sub-mode may be greater than the number of the optimization parameters corresponding to the second display enhancement sub-mode. In an implementation, when the optimization parameters included in the target display enhancement mode include exposure enhancement, denoising, edge sharpening, contrast increase and saturation increase, the optimization parameters included in the first display enhancement sub-mode may include exposure enhancement, dryness removal, edge sharpening and contrast increase, and the optimization parameters included in the second display enhancement sub-mode may include exposure enhancement, denoising and edge sharpening. In this way, an optimization effect achieved by performing the first display enhancement sub-mode on the video resource may be better than that achieved by performing the second display enhancement sub-mode on the video resource.

In an implementation, the electronic device may perform display enhancement on the video resource, which corresponds to the video file type and is to be played, differentially by selecting different display enhancement modes, and the different display enhancement modes may be determined by the electronic device based on the user's preference levels for different video file types. In the present embodiment, the display effect achieved by the electronic device performing display enhancement on the video resource to be played may be positively correlated to the user's preference level for the video resource to be played. Specifically, in the electronic device, the preference level for the video file type of the video resource to be played may include a first preference level and a second preference level, and the first preference level may be higher than the second preference level. For example, the first preference level may be "extremely prefer" and the second preference level may be "very prefer". In response to the preference level being the first preference level, the display enhancement may be performed on the video resource to be played based on the first display enhancement sub-mode. In response to the preference level being the second preference level, the display enhancement may be performed on the video resource to be played based on the second display enhancement sub-mode.

In an operation S304, display enhancement may be performed on the video resource to be played based on the target display enhancement sub-mode.

According to the video processing method provided by still another embodiment of the present disclosure, the video file type of the video resource to be played may be acquired, the preference level that the user of the electronic device prefers the video file type may be acquired, the target display enhancement sub-mode corresponding to the preference level may be determined from the plurality of display enhancement sub-modes, and display enhancement may be performed on the video resource to be played based on the target display enhancement sub-mode. Compared with the video processing method shown in FIG. 2, in the present embodiment, the target display enhancement sub-mode may be determined based on the user's preference level for the video file type of the video resource, so as to improve the user experience.

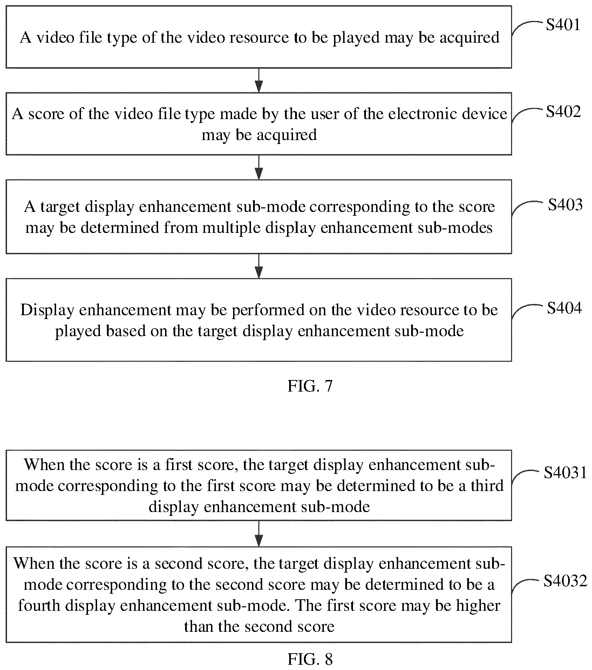

Please refer to FIG. 7, FIG. 7 is a flow chart of a video-processing method according to still another embodiment of the present disclosure. The target display enhancement mode may include a plurality of display enhancement sub-modes. The process shown in FIG. 7 may be illustrated in detail. The video processing method may specifically include the following operations.

In an operation S401, the video file type of the video resource to be played may be acquired.

Detailed description of the operation S401 may refer to the operation S101, which will not be repeatedly described hereinafter.

In an operation S402, the score of the video file type made by the user of the electronic device may be acquired.

In an implementation, the user of the electronic device may input the score for each video file type, and the score may be taken as a basis for electronic device to determine the display enhancement for the video file type of the acquired video resource to be played. The score may include "five points", "four points", "three points", "two points" and "one point". The video file types may include the video file type B1, the video file type B2, the video file type B3, the video file type B4 and the video file type B5. The user of the electronic device may mark the video file type B1 as "five points"; mark the video file type B2 as "four points"; mark the video file type B3 as "three points"; mark the video file type B4 as "two points"; and mark the video file type B5 as "one point".

Further, after acquiring the video file type of the video resource to be played, the electronic device may compare the video file type with the predetermined video file type to acquire the video file type being the same as the video file type of the video resource to be played, and then acquire the score marked for the video file type, and take the acquired score as the score made by the user for the video file type of the video resource to be played. For example, the electronic device may compare the video file type of the video resource to be played with the video file type B1, the video file type B2, the video file type B3, the video file type B4 and the video file type B5 respectively to acquire a video file type being the same as the video file type of the video resource to be played. In response to the video file type of the video resource to be played being the same as the video file type B1, the score of the video file type of the video resource to be played may be five points.

In an operation S403, the target display enhancement sub-mode corresponding to the score may be determined from the plurality of display enhancement sub-modes.

In the present embodiment, the electronic device may set a specified score, serving as a determination basis for the scores made by the users. It should be understood that the specified score may be stored locally in the electronic device in advance, or set while performing the determination operation, which will not be limited by the present disclosure. In addition, the specified score may be automatically set by the electronic device, manually set by the user, or transmitted to the electronic device after being set by the server, which will not be limited by the present disclosure. For example, the specified score may be "four points". Furthermore, after acquiring the score made by the user for the video file type of the video resource to be played, the electronic device may compare the score with the specified score to determine whether the score meets the specified score.

In response to the score of the video file type of the video resource to be played made by the user of the electronic device being less than the specified score, for example, in response to the score of the video file type of the video resource to be played made by the user being "two points", indicating that the user has low interest in the video resource to be played, the user does not have high requirements for the video image quality of the electronic device when playing the video resource to be played. Therefore, the video resource may be played directly, and display enhancement may not be performed on the video resource to be played, so as to reduce power consumption of the electronic device.

On the contrary, in response to the score of the video file type of the video resource to be played made by the user of the electronic device being not less than the specified score, the target display enhancement sub-mode corresponding to the score may be determined from the plurality of display enhancement sub-modes. Specifically, a specific process of determining the target display enhancement sub-mode corresponding to the score may be similar to that of determining the target display enhancement mode corresponding to the video file type, which will not be repeatedly described hereinafter.

Please refer to FIG. 8, FIG. 8 is a flow chart of the operation S303 of the video-processing method shown in FIG. 7. The process shown in FIG. 8 will be described in detail below. The method may specifically include the following operations.

In an operation S4031, when the score is a first score, the target display enhancement sub-mode corresponding to the first score may be determined to be a third display enhancement sub-mode.

In an operation S4032, when the score is a second score, the target display enhancement sub-mode corresponding to the second score may be determined to be a fourth display enhancement sub-mode. The first score may be greater than the second score.

The display enhancement sub-mode may further include the third display enhancement sub-mode and the fourth display enhancement sub-mode, and the video image quality acquired by processing the video resource to be played through the third display enhancement sub-mode may be better than that acquired by processing the video resource to be played through the display enhancement sub-mode. That is, the number of optimization parameters corresponding to the third display enhancement sub-mode may be greater than the number of optimization parameters corresponding to the fourth display enhancement sub-mode. In an implementation, the optimization parameters included in the target display enhancement mode may include exposure enhancement, denoising, edge sharpening, contrast increase and saturation increase, the optimization parameters included in the third display enhancement sub-mode may include denoising, edge sharpening and contrast increase, and the optimization parameters included in the fourth display enhancement sub-mode may include denoising and saturation increase, and edge sharpening. Therefore, the optimization effect achieved by optimizing the video resource through the third display enhancement sub-mode may be better than that achieved by optimizing the video resource through the fourth display enhancement sub-mode.

In an implementation, the electronic device may perform display enhancement on the video resource, which corresponds to the video file type and is to be played, differentially by selecting different display enhancement modes, and the different display enhancement modes may be determined by the electronic device based on the scores for different video file types made by the user. Specifically, in the electronic device, the score of the video file type of the video resource to be played may include a first score and a second score, and the first score may be higher than the second score. For example, the first score may be "scoring" and the second score may be "four points". In response to the score being the first score, the display enhancement may be performed on the video resource to be played based on the third display enhancement sub-mode. In response to the score being the second score, the display enhancement may be performed on the video resource to be played based on the fourth display enhancement sub-mode.

In an operation S404, display enhancement may be performed on the video resource to be played based on the target display enhancement sub-mode.

According to the video processing method provided by another embodiment of the present disclosure, the video file type of the video resource to be played may be acquired, the score of the video file type made by the user of the electronic device may be acquired, the target display enhancement sub-mode corresponding to the score may be determined from the plurality of display enhancement sub-modes, and display enhancement may be performed on the video resource to be played based on the target display enhancement sub-mode. Compared with the video processing method shown in FIG. 2, in the present embodiment, the target display enhancement sub-mode may be determined based on the score of the video resource file type made by the user, so as to improve the user experience.

Please refer to FIG. 9, FIG. 9 is a block diagram of a video-processing apparatus according to an embodiment of the present disclosure. The video processing apparatus 200 may be applied on the electronic device. FIG. 9 will be described in detail below, the video processing apparatus 200 may include: an acquisition module 210, a determination module 220 and a processing module 230.

The acquisition module 210 may be configured to acquire the video file type of the video resource to be played.

The determination module 220 may be configured to determine the target display enhancement mode corresponding to the video file type from a plurality of display enhancement modes. Processing the video resource to be played by the plurality of display enhancement modes may obtain different image qualities. Further, the determination module 220 includes: a first judgement sub-module, a first determination sub-module, an acquisition sub-module, a second determination sub-module, a processing sub-module, a preference level acquisition sub-module, a third determination sub-module, a second judgement sub-module, a play sub-OK, a score acquisition sub-module, a fourth determination sub-module, an establishment sub-module, and an adding sub-module.

The first determination sub-module may be configured to determine whether a display enhancement mode corresponding to the video file type is present in the plurality of display enhancement modes.

The first determination sub-module may be configured to determine the display enhancement mode corresponding to the video file type as the target display enhancement mode, in response to the video file type being the same as any one of the acquired plurality of video file types.

The acquisition sub-module may be configured to a plurality of display enhancement modes to be selected may be acquired, in response to the display enhancement mode corresponding to the video file type being not present in a plurality of display enhancement modes.

The second determination sub-module may be configured to determine the current display enhancement mode from the plurality of display enhancement modes to be selected. The second determination sub-module may further include: an output unit, a receiving unit, and a first determination unit.

The output unit may be configured to output the plurality of display enhancement modes to be selected.

The receiving unit may be configured to receive a selection operation which is triggered by a user based on plurality of display enhancement modes to be selected.

The first determination unit may be configured to determine the current display enhancement modes from the plurality of display enhancement modes to be selected based on the selection operation.

The processing sub-module may be configured to perform display enhancement on the video resource to be played based on the current display enhancement mode.

The preference level acquisition sub-module may be configured to acquire a preference level that the user of the electronic device prefers the video file type.

The third determination sub-module may be configured to determine a target display enhancement sub-mode corresponding to the preference level from a plurality of display enhancement sub-modes. Further, the display enhancement sub-mode may include a first display enhancement sub-mode and a second display enhancement sub-mode. The video image quality acquired by performing the first display enhancement sub-mode on the video resource to be played may be higher than that acquired by performing the second display enhancement sub-mode on the video resource to be played. The third determination sub-module may include: a second determination unit and a third determination unit.

The second determination unit may be configured to determine the target display enhancement sub-mode corresponding to a first preference level as a first display enhancement sub-mode, in response to the preference level being the first preference level.

The third determination unit may be configured to determine the target display enhancement sub-mode corresponding to a second preference level as a second display enhancement sub-mode, in response to the preference level being the second preference level. The first preference level may be greater the second preference level.

The second determination sub-mode may be configured to determine whether the preference level is lower than a specified preference level.

The play sub- mode may be configured to play the video resource to be played in response to the preference level being lower than the specified preference level.

The score acquisition sub-mode may be configured to acquire a score of the video file type made by the user of the electronic device.

The fourth determination sub-mode may be configured to determine a target display enhancement sub-mode corresponding to the score from the plurality of display enhancement sub-modes. Further, the display enhancement sub-mode may further include a third display enhancement sub-mode and a fourth display enhancement sub-mode. The video quality obtained by performing the third display enhancement sub-mode on the video resource to be played may be higher than that obtained by performing the fourth display enhancement sub-mode on the video resource to be played. The fourth determination sub-mode may further include: a fourth determination unit and a fifth determination unit.

The fourth determination unit may be configured to determine the target display enhancement sub-mode corresponding to the first score to be the third display enhancement sub-mode, in response to the score being the first score.

The fifth determination unit may be configured to determine the target display enhancement sub-mode corresponding to the second score to be the fourth display enhancement sub-mode, in response to the score being the second score.

The establish sub-mode may be configured to establish a correspondence relationship between the video file type and the current display enhancement mode.

An adding sub-mode may be configured to add the correspondence relationship to a preset mapping table. The preset mapping table may include correspondence relationships between a plurality of display enhancement modes and a plurality of video file types.

The processing module 230 may be configured to perform display enhancement on the video resource to be played based on the target display enhancement mode. The target display enhancement mode may be performed on images in the video file to improve video quality of the video file.

Those skilled in the art should clearly understand that, in order to provide a concise description, specific processes for describing the operation of the device and modules can be referred to the corresponding processes in the preceding method embodiments and will not be repeatedly described hereinafter.

In various embodiments of the present disclosure, the modules may be coupled to each other electrically, mechanically or in other forms.

In addition, various functional modules in each embodiment of the present disclosure may be integrated in a single processing module. Alternatively, the various modules may be configured separately. Alternatively, two or more modules may be integrated in a single module. The above integrated modules can be represented either in the form of hardware or in the form of software functional modules.

As shown in FIG. 10, a structural diagram of an electronic device 100 according to an embodiment of the present disclosure is shown. The electronic device 100 may be an electronic device capable of running applications, such as a smartphone, a tablet computer, an e-book, and so on. The electronic device 100 of the present disclosure may include one or more of the following components: a processor 110, a memory 120, a screen 130, a codec 140, and one or more applications. The one or more applications may be stored in the memory 120 and configured to be executed by one or more processors 110. The one or more programs may be configured to perform a method as described in the preceding method embodiments.

The processor 110 may include one or more processing cores. The processor 110 uses various interfaces and lines to connect various components of the electronic device 100. The processor 110 may run or execute instructions, programs, code sets, or instruction sets stored in the memory 120, and invoke data stored in the memory 120, to perform various functions and process data of the electronic device 100. In some embodiments, the processor 110 may be represented by at least one of hardware forms of: a digital signal processing (DSP), a field-programmable gate array (FPGA), a programmable logic array (PLA) Logic Array (PLA). The processor 110 may integrate any one or a combination of: a Central Processing Unit (CPU), a Graphics Processing Unit (GPU), and a modem. The CPU may run the operating system, the user interface, the applications, and so on. The GPU may be configured to render and draw content to be displayed. The modem may be configured for wireless communication. It should be understood that the above modem may also be implemented as a separate communication chip without being integrated into the processor 110.

The memory 120 may include a Random Access Memory (RAM) or a Read-Only Memory (RAM). The memory 120 may be configured to store instructions, programs, codes, code sets, or instruction sets. The memory 120 may include a program storage area and a data storage area. The program storage area may be configured to store instructions for implementing the operating system, instructions for implementing at least one function (such as a touch control, a sound playing function, an image playing function, and so on), instructions for implementing each of the described method embodiments, and so on. The data storage area may be configured to store data created while using the terminal 100 (such as a contact list, audio and video data, chat records), and so on.

The codec 140 may be configured to encode or decode the video data and transmit the decoded video data to the screen 130 for display. The codec 140 may be the GPU, a specified DSP, FPGA, ASIG chip, and so on.

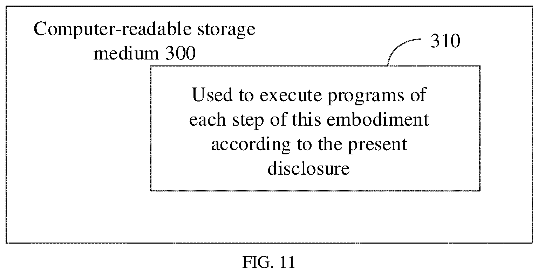

As shown in FIG. 11, a structural diagram of a computer-readable storage medium according to an embodiment of the present disclosure is provided. The computer-readable storage medium 300 may store computer codes. The computer codes may be invoked by the processor to perform the method as described in the above method embodiments.

The computer-readable storage medium 300 may be an electronic memory such as a flash memory, an electrically erasable programmable read-only memory (EEPROM), an EPROM, a hard disk, or a ROM. In some embodiments, the computer-readable storage medium 300 may include a non-transitory computer-readable storage medium. The computer-readable storage medium 300 may have storage space, storing a program code 310 for performing any operation of the method described above. The program code may be read from or written to one or more computer program products. The program code 310 may be compressed in an appropriate form.

In summary, according to the video processing method, the apparatus, the electronic device, and the storage medium provided by the embodiments of the present disclosure, the video file type of a video resource to be played may be acquired; and the target display enhancement mode corresponding to the video file type may be determined from the plurality of display enhancement modes. Processing the video resource to be played by the plurality of display enhancement modes obtains different image qualities. Display enhancement may be performed on the video resource to be plated based on the target display enhancement mode. The target display enhancement mode may be performed on images of the video file to improve the video quality of the video file. In this way, different display enhancement modes may be determined based on different video file types. The video resource to be played may be enhanced by the corresponding display enhancement mode, such that the display effect of the video resource to be played may be improved.

It should be noted that the above embodiments illustrates the technical solution of the present disclosure, but does not limit the present disclosure. Although the present disclosure are illustrated in detail with reference to the above embodiments, those of ordinary skill in the art should understand that the technical solution described in the above embodiments may be modified, or some of the technical features may be replaced with equivalent features. The modifications and replacements do not drive the essence of the technical solution to depart away from the spirit and the scope of the technical solutions of the embodiments of the present disclosure.

**Claims**

1.  A video processing method, applied on an electronic device, comprising:

    acquiring a video file type of a video resource to be played;
    determining a target display enhancement mode corresponding to the video file type from a plurality of display enhancement modes, wherein processing the video resource to be played by the plurality of display enhancement modes obtains different image qualities;
    performing display enhancement on the video resource to be played based on the target display enhancement mode, wherein an image in a video file is enhanced by performing the target display enhancement mode, and an image quality of the video file is improved.

2.  The video-processing method according to claim 1, wherein the determining a target display enhancement mode corresponding to the video file type from a plurality of display enhancement modes, comprises:

    determining whether a display enhancement mode corresponding to the video file type is present in the plurality of display enhancement modes;
    determining the display enhancement mode corresponding to the video file type to be the target display enhancement mode, in response to the display enhancement mode corresponding to the video file type being present in the plurality of display enhancement modes.

3.  The video-processing method according to claim 2, wherein the determining whether a display enhancement mode corresponding to the video file type is present in the plurality of display enhancement modes, comprises:

    acquiring a plurality of video file types corresponding to the plurality of display enhancement modes;
    comparing the video file type with each of the acquired plurality of video file types;
    determining that the display enhancement mode corresponding to the video file type is present in the plurality of display enhancement modes, in response to the video file type being the same as any one of the acquired plurality of video file types; and
    determining that the display enhancement mode corresponding to the video file type is not present in the plurality of display enhancement modes, in response to the video file type being different from any one of the acquired plurality of video file types.

4.  The video-processing method according to claim 2 or claim 3, further comprising:

    acquiring a plurality of display enhancement modes to be selected, in response to the display enhancement mode corresponding to the video file type being not present in the plurality of display enhancement modes;
    determining a current display enhancement mode from the plurality of display enhancement modes to be selected; and
    performing display enhancement on the video resource to be played based on the current display enhancement mode.

**5.** The video-processing method according to claim 4, wherein the determining a current display enhancement mode from the plurality of display enhancement modes to be selected, comprises:

outputting the plurality of display enhancement modes to be selected;
receiving a selection operation which is triggered by a user based on the plurality of display enhancement modes to be selected;
determining the current display enhancement modes from the plurality of display enhancement modes to be selected based on the selection operation.

**6.** The video-processing method according to claim 5, wherein the receiving a selection operation which is triggered by a user based on the plurality of display enhancement modes to be selected, comprises:

detecting the selection operation performed on the plurality of display enhancement modes to be selected;
receiving the selection operation, in response to the selection operation triggered by the users being detected.

**7.** The video-processing method according to claim 4 or claim 5, wherein after the determining a current display enhancement mode from the plurality of display enhancement modes to be selected, the method further comprises:

establishing a corresponding relationship between the current display enhancement mode and the video file type; and
adding the corresponding relationship into a predetermined mapping table, wherein the predetermined mapping table comprises corresponding relationships between a plurality of display enhancement modes and a plurality of video file types.

**8.** The video-processing method according to any one of claims 1 to 7, wherein the target display enhancement mode comprises a plurality of display enhancement sub-modes, and the method further comprises:

acquiring a preference level that a user of the electronic device prefers the video file type; and
determining a target display enhancement sub-mode corresponding to the preference level from the plurality of display enhancement sub-modes.

**9.** The video-processing method according to claim 8, wherein the display enhancement sub-mode comprises a first display enhancement sub-mode and a second display enhancement sub-mode, a video quality obtained by performing the first display enhancement sub-mode on the video resource to be played is higher than that obtained by performing the second display enhancement sub-mode on the video resource to be played, and the determining a target display enhancement sub-mode corresponding to the preference level from the plurality of display enhancement sub-modes, comprises:

determining a target display enhancement sub-mode corresponding to the first preference level to be the first display enhancement sub-mode, in response to the preference level being a first preference level;
determining a target display enhancement sub-mode corresponding to the second preference level to be the second display enhancement sub-mode, in response to the preference level being a second preference level;
wherein the first preference level is higher than the second preference level.

**10.** The video-processing method according to claim 8 or claim 9, further comprising:

determining whether the preference level is less than a specified preference level;
playing the video resource to be played directly, in response to the preference level being less than the specified preference level.

**11.** The video-processing method according to claim 8, wherein the acquiring a preference level that a user of the electronic device prefers the video file type, comprises:

comparing the video file type with each of a plurality of predetermined video file types;
acquiring a predetermined video file type, which is the same as the video file type, from the plurality of predetermined video file types;
acquiring a preference level marked for the predetermined video file type, and taking the preference level marked for the predetermined video file type as the preference level of the video file type.

**12.** The video-processing method according to any one of the claims 1 to 7, wherein the target display enhancement mode comprises a plurality of display enhancement sub-modes, and the method further comprises:

acquiring a score of the video file type made by the user of the electronic device;
determining the target display enhancement sub-mode corresponding to the score from the plurality of display enhancement sub-modes.

**13.** The video processing method according to claim 12, wherein the display enhancement sub-mode comprises a third display enhancement sub-mode and a fourth display enhancement sub-mode, a video quality obtained by performing the third display enhancement sub-mode on the video resource to be played is higher than that obtained by performing the fourth display enhancement sub-mode on the video resource to be played, and the determining the target display enhancement sub-mode corresponding to the score from the plurality of display enhancement sub-modes, comprises:

determining a target display enhancement sub-mode corresponding to a first score to be the third display enhancement sub-mode in response to the score being the first score;
determining a target display enhancement sub-mode corresponding to a second score to be the fourth display enhancement sub-mode, in response to the score being the second score;
wherein the first score is greater than the second score.

**14.** The video-processing method according to claim 12 or claim 13, further comprising

determining whether the score is less than a specified score;
playing the video resource to be played directly, in response to the score being less than the specified score.

**15.** The video-processing method according to claim 12, wherein the acquiring a score of the video file type made by the user of the electronic device, comprises:

comparing the video file type with a plurality of predetermined video file types;
acquiring a predetermined video file type, which is the same as the video file type, from the acquired plurality of predetermined video file types;
acquiring a score marked for the predetermined video file type and taking the score marked for the predetermined video file type as the score of the video file type.

**16.** The video-processing method according to any one of claims 1 to 15, wherein the acquiring a video file type of a video resource to be played, comprises:

acquiring a name of the video resource to be played;
identifying the name, and acquiring the video file type of the video resource to be played.

**17.** The video-processing method according to claim 1, where the determining a target display enhancement mode corresponding to the video file type from a plurality of display enhancement modes, comprises:

searching a predetermined video file type, which is the same as the video file type, from the mapping table, wherein the mapping table comprises corresponding relationships between a plurality of display enhancement modes and a plurality of video file types;
searching the display enhancement mode corresponding to the predetermined video file type based on the corresponding relationships; and
determining the display enhancement mode to be the target display enhancement mode.

**18.** A video processing apparatus, applied on an electronic device, the apparatus comprising:

an acquisition module, configured to acquire a video file type of a video resource to be played;
a determination module, configured to determine the target display enhancement mode corresponding to the video file type from a plurality of display enhancement modes, wherein processing the video resource to be played by the plurality of display enhancement modes obtains different image qualities;
a processing module, configured to perform display enhancement on the video resource to be played based on the target display enhancement mode, wherein an image in a video file is enhanced by performing the target display enhancement mode, and an image quality of the video file is improved.

19. An electronic device, comprising a memory and a processor, wherein the memory is coupled to the processor, the memory is configured to store instructions, and the processor is configured to execute the method according to any of the claims 1 to 17 when the instructions are executed by the processor.

20. A computer-readable storage medium, storing program codes, wherein the program codes are capable of being invoked and executed by a processor to execute the method according to any one of the claims 1 to 17.

```
┌─────────────────────────┐              ┌─────────────────────────┐
│      Video Player       │              │      Video Player       │
│     (Hard-decoding)     │              │     (Soft-decoding)     │
└─────────────────────────┘              └─────────────────────────┘
            │                                         │
            ▼                                         │
┌─────────────────────────┐                           │
│     Media Framework     │                           │
└─────────────────────────┘                           │
            │                                         │
            ▼                                         │
┌─────────────────────────┐                           │
│      Video Decoder      │                           │
└─────────────────────────┘                           │
            │                                         │
            ▼                                         │
┌─────────────────────────┐                           │
│      Video Driver       │                           │
└─────────────────────────┘                           │
            │                                         │
            ▼                                         ▼
┌───────────────────────────────────────────────────────┐
│                 Video Transfer Layer                  │
└───────────────────────────────────────────────────────┘
                          │
                          ▼
┌───────────────────────────────────────────────────────┐
│                      Displayer                        │
└───────────────────────────────────────────────────────┘
                          │
                          ▼
┌───────────────────────────────────────────────────────┐
│                      Backlight                        │
└───────────────────────────────────────────────────────┘
```

FIG. 1

| Acquiring a video file type of a video resource to be played | ⟩ S101 |

↓

Determining a target display enhancement mode corresponding to the video file type from a plurality of display enhancement modes, wherein processing the video resource to be played by the plurality of display enhancement modes obtains different image qualities — S102

↓

Performing display enhancement on the video resource to be played based on the target display enhancement mode, wherein the display enhancement processes an image in a video file through the target display enhancement mode to improve an image quality of the video file — S103

FIG. 2

The video file type of the video resource to be played may be acquired — S201

Whether the display enhancement mode corresponding to the video file type is present among the plurality display enhancement modes — S202

NO

A plurality of candidate display enhancement modes to be selected may be acquired — S205

A current display enhancement mode may be determined from the plurality of candidate display enhancement modes — S206

The current display enhancement mode may be performed on the video resource to be played — S207

A corresponding relationship between the video file type and the current display enhancement mode may be established — S208

The corresponding relationship may be added to the predetermined mapping table. The predetermined mapping table may include the corresponding relationships between the plurality of display enhancement modes and the plurality of video file types — S209

YES — S203

The display enhancement method corresponding to the video file type may be determined as the target display enhancement mode

Performing the target display enhancement on the video resource to be played — S204

FIG. 3

a plurality of display enhancement modes to be selected may be output — S2061

a selection operation triggered by the user based on a plurality of display enhancement modes to be selected may be received — S2062

a current display enhancement mode may be determined from a plurality of display enhancement modes to be selected based on the selection operation — S2063

FIG. 4

a video file type of the video resource to be played may be acquired ⌐S301

a preference level that the user of the electronic device prefers the video file type may be acquired ⌐S302

a target sub-display enhancement mode corresponding to the preference level may be determined from multiple sub-display enhancement modes ⌐S303

display enhancement may be performed on the video resource to be played based on the target sub display enhancement mode ⌐S304

FIG. 5

In response to the preference level being a first preference level, the target display enhancement sub-mode corresponding to the first preference level may be determined as the first display enhancement sub-mode ⌐S3031

In response to the preference level being a second preference level, the target display enhancement sub-mode corresponding to the second preference level may be determined to be a second display enhancement sub-mode. The first preference level may be greater than the second preference level ⌐S3032

FIG. 6

A video file type of the video resource to be played may be acquired — S401

A score of the video file type made by the user of the electronic device may be acquired — S402

A target display enhancement sub-mode corresponding to the score may be determined from multiple display enhancement sub-modes — S403

Display enhancement may be performed on the video resource to be played based on the target display enhancement sub-mode — S404

FIG. 7

When the score is a first score, the target display enhancement sub-mode corresponding to the first score may be determined to be a third display enhancement sub-mode — S4031

When the score is a second score, the target display enhancement sub-mode corresponding to the second score may be determined to be a fourth display enhancement sub-mode. The first score may be higher than the second score — S4032

FIG. 8

Video processing apparatus 200

Acquistion-module 210

Aetermination-module 220

Processing-module 230

FIG. 9

electronic device 100

codec 140

processor
110

Memory
120

screen
130

FIG. 10

Computer-readable storage
medium 300

310

Used to execute programs of
each step of this embodiment
according to the present
disclosure

FIG. 11

## INTERNATIONAL SEARCH REPORT

| International application No. |
|---|
| **PCT/CN2019/104132** |

**A.  CLASSIFICATION OF SUBJECT MATTER**

H04N 21/431(2011.01)i;  H04N 21/4402(2011.01)i;  H04N 21/443(2011.01)i;  H04N 21/45(2011.01)i

According to International Patent Classification (IPC) or to both national classification and IPC

**B.  FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, WPI, EPODOC, IEEE, CNKI: 视频, 节目, 类型, 类别, 种类, 画质, 画面, 图像, 影像, 质量, 增强, 加强, 提高, 提升, 喜好, 喜爱, 评分, video, program, type, genre, category, image, picture, quality, enhanc+, improv+, intensi+, reinforc+ strengthen+, preferenc+, lik+, lov+, favourit+, grade

**C.  DOCUMENTS CONSIDERED TO BE RELEVANT**

| Category* | Citation of document, with indication, where appropriate, of the relevant passages | Relevant to claim No. |
|---|---|---|
| PX | CN 109361949 A (OPPO GUANGDONG MOBILE TELECOMMUNICATIONS CORP., LTD.) 19 February 2019 (2019-02-19) entire document | 1-20 |
| X | CN 108683826 A (TENCENT TECHNOLOGY SHENZHEN CO., LTD.) 19 October 2018 (2018-10-19) description, paragraphs 0041, 0050-0054, and 0192 | 1-7, 16-20 |
| Y | CN 108683826 A (TENCENT TECHNOLOGY SHENZHEN CO., LTD.) 19 October 2018 (2018-10-19) description, paragraphs 0041, 0050-0054, and 0192 | 8-15 |
| Y | CN 108810649 A (SHENZHEN SKYWORTH RGB ELECTRONICS CO., LTD.) 13 November 2018 (2018-11-13) description, paragraphs 0127-0129 | 8-15 |
| X | CN 102668580 A (SHARP CORPORATION) 12 September 2012 (2012-09-12) description, paragraphs 0012, 0053-0056, and 0084-0087 | 1-7, 16-20 |
| Y | CN 102668580 A (SHARP CORPORATION) 12 September 2012 (2012-09-12) description, paragraphs 0012, 0053-0056, and 0084-0087 | 8-15 |

☑ Further documents are listed in the continuation of Box C.     ☑ See patent family annex.

| | |
|---|---|
| *  Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **30 October 2019** | **28 November 2019** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2019/104132**

### C.    DOCUMENTS CONSIDERED TO BE RELEVANT

| Category* | Citation of document, with indication, where appropriate, of the relevant passages | Relevant to claim No. |
|---|---|---|
| X | US 2009268960 A1 (KABUSHIKI KAISHA TOSHIBA) 29 October 2009 (2009-10-29) description, paragraphs 0025-0043 | 1-7, 16-20 |
| Y | US 2009268960 A1 (KABUSHIKI KAISHA TOSHIBA) 29 October 2009 (2009-10-29) description, paragraphs 0025-0043 | 8-15 |

Form PCT/ISA/210 (second sheet) (January 2015)

**INTERNATIONAL SEARCH REPORT**
Information on patent family members

International application No.

**PCT/CN2019/104132**

| Patent document cited in search report | | | Publication date (day/month/year) | Patent family member(s) | | | Publication date (day/month/year) |
|---|---|---|---|---|---|---|---|
| CN | 109361949 | A | 19 February 2019 | None | | | |
| CN | 108683826 | A | 19 October 2018 | None | | | |
| CN | 108810649 | A | 13 November 2018 | None | | | |
| CN | 102668580 | A | 12 September 2012 | JP | WO2011037147 | A1 | 21 February 2013 |
| | | | | BR | 112012006694 | A2 | 10 May 2016 |
| | | | | US | 8479249 | B2 | 02 July 2013 |
| | | | | RU | 2012115858 | A | 27 October 2013 |
| | | | | CN | 102668580 | B | 02 September 2015 |
| | | | | MX | 2012003534 | A | 08 May 2012 |
| | | | | JP | 5362834 | B2 | 11 December 2013 |
| | | | | EP | 2482553 | A1 | 01 August 2012 |
| | | | | WO | 2011037147 | A1 | 31 March 2011 |
| | | | | US | 2012233634 | A1 | 13 September 2012 |
| | | | | EP | 2482553 | A4 | 27 March 2013 |
| US | 2009268960 | A1 | 29 October 2009 | US | 8310496 | B2 | 13 November 2012 |
| | | | | JP | 5197137 | B2 | 15 May 2013 |
| | | | | JP | 2009267929 | A | 12 November 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811429222X